# EUROPEAN PATENT APPLICATION

(11) **EP 2 040 359 A2**
(43) Date of publication of application: **25.03.2009**
(21) Application number: 08016443.7
(22) Date of filing: 18.09.2008
(51) Int. Cl.: H02K 21/14

(54) **Interphase insulating sheet of rotating electric machine, method for manufacturing interphase insulating sheet, and electric compressor**

(30) Priority: 21.09.2007 JP 2007245622
(71) Applicant: KABUSHIKI KAISHA TOYOTA JIDOSHOKKI, Kariya-shi, Aichi-ken (JP)
(72) Inventor: Horiba, Tatsuya, Kariya-shi, Aichi-ken (JP); Fukasaku, Hiroshi, Kariya-shi, Aichi-ken (JP)
(74) Representative: HOFFMANN EITLE

(57) **Abstract**

An interphase insulating sheet of a rotating electric machine is disclosed. The interphase insulating sheet includes a first insulating portion arranged between first coil ends of two different phases, a second insulating portion arranged between second coil ends of two different phases, and bridge pieces inserted in slots. The first insulating portion and the second insulating portion each includes an outer surface facing radially outward of the stator core and an inner surface facing radially inward of the stator core. The bridge pieces each include a first end portion that is heat welded to the first insulating portion and a second end portion that is heat welded to the second insulating portion. When the first end portion is heat welded to the inner surface of the first insulating portion, the region including the edge of the first end portion is heat welded to the first insulating portion. When the second end portion is heat welded to the outer surface of the second insulating portion, at least the region including an opposing end of the second insulating portion facing the first insulating portion is heat welded to the second end portion.

## Description

### BACKGROUND OF THE INVENTION

The present invention relates to an interphase insulating sheet of rotating electric machine, a method for manufacturing the interphase insulating sheet, and an electric compressor.

Japanese Laid-Open Patent Publication No. 58-119739 discloses an interphase insulating sheet arranged between the ends of the coil of one phase and the ends of the coils of the other phases. The interphase insulating sheet disclosed in the above publication includes a pair of coil end insulating portions, which insulate the coil ends from each other, and coupling pieces (bridge pieces), which are inserted in slots of a stator. The pair of coil end insulating portions and the coupling pieces are formed separately, and both ends of each coupling piece are heat welded to the pair of coil end insulating portions.

The coils, which is wound around the stator by wave winding, are inserted in the slots using an inserter as disclosed in, for example, Japanese Laid-Open Patent Publication No. 2005-80356. In a case where the coupling pieces disclosed in the above publication No. 58-119739 are arranged on the inner surface of the pair of annular coil end insulating portions, when the coils are inserted from the insertion ends of the slots, the coils might get caught on the edges of the coupling pieces located in the vicinity of the insertion ends. In this case, the insulating coating of the coils might be damaged or the edges of the coupling pieces might be torn off. In a case where the coupling pieces disclosed in the above publication No. 58-119739 are arranged on the outer surface of the pair of annular coil end insulating portions, when the coil is inserted in the slots, the coils might get caught on the edges of the coil end insulating portion located in the vicinity of the ends of the slots opposite to the insertion ends. In this case, the insulating coating of the coil might be damaged.

### SUMMARY OF THE INVENTION

Accordingly, it is an objective of the present invention to provide an interphase insulating sheet of a rotating electric machine that prevents coils to be inserted from getting caught by the edges of bridge pieces or the edge of the insulating sheet, and a method for manufacturing the interphase insulating sheet.

To achieve the foregoing objective and in accordance with one aspect of the present invention, an interphase insulating sheet of a rotating electric machine is provided. The rotating electric machine is provided with a stator including an annular stator core. The stator core includes first and second end faces facing opposite directions in the axial direction of the stator core. The stator core includes a plurality of teeth arranged along an inner circumference of the stator core in the circumferential direction. Slots are formed between adjacent teeth. Each slot includes a first open end, which opens in the first end face, and a second open end, which opens in the second end face. Coils of a plurality of phases are inserted in the slots from the first open ends and are provided on the teeth in wave winding passing through the slots. The coil of each phase includes a first coil end arranged to protrude outside from the first end face and a second coil end arranged to protrude outside from the second end face. The interphase insulating sheet includes a first insulating portion arranged between the first coil ends of two different phases, a second insulating portion arranged between the second coil ends of two different phases, and at least one bridge piece inserted in one of the slots. The first insulating portion and the second insulating portion each include an outer surface facing radially outward of the stator core and an inner surface facing radially inward of the stator core. The bridge piece includes a first end portion, which is located in the vicinity of the first open end of the associated slot and heat welded to the first insulating portion, and a second end portion, which is located in the vicinity of the second open end of the associated slot and heat welded to the second insulating portion. When the first end portion of the bridge piece is heat welded to the inner surface of the first insulating portion, at least the region including the edge of the first end portion is heat welded to the first insulating portion. When the second end portion of the bridge piece is heat welded to the outer surface of the second insulating portion, at least the region including an opposing end of the second insulating portion facing the first insulating portion is heat welded to the second end portion of the bridge piece.

In accordance with another aspect of the present invention, a method for manufacturing an interphase insulating sheet of a rotating electric machine is provided. The rotating electric machine is provided with a stator including an annular stator core. The stator core includes first and second end faces facing opposite directions in the axial direction of the stator core. The stator core includes a plurality of teeth arranged along an inner circumference of the stator core in the circumferential direction. Slots are formed between adjacent teeth. Each slot includes a first open end, which opens in the first end face, and a second open end, which opens in the second end face. Coils of a plurality of phases are inserted in the slots from the first open ends and are provided on the teeth in wave winding passing through the slots. The coil of each phase includes a first coil end arranged to protrude outside from the first end face and a second coil end arranged to protrude outside from the second end face. The method includes: preparing a first insulating portion to be arranged between the first coil ends of two different phases and a second insulating portion to be arranged between the second coil ends of two different phases, the first insulating portion and the second insulating portion each including an outer surface facing radially outward of the stator core and an inner surface facing radially inward of the stator core; preparing at least one bridge piece to be inserted in the associated slot, the bridge piece including a first end portion coupled to the first insulating portion and a second end portion coupled to the second insulating portion; preparing an ultrasonic welding base and an ultrasonic welding horn; and ultrasonically welding the first insulating portion and the edge of the first end portion in a state where the first insulating portion contacts the first end portion by sandwiching the first insulating portion and the edge of the first end portion between the ultrasonic welding base and the ultrasonic horn.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1A is a cross-sectional view illustrating an electric compressor according to a first embodiment of the present invention;
Fig. 1B is a perspective view illustrating the interphase insulating sheet provided in the compressor of Fig. 1A;
Fig. 2A is an developed view illustrating the interphase insulating sheet of Fig. 1B;
Fig. 2B is a cross-sectional view taken along line 2B-2B in Fig. 2A;
Fig. 2C is a cross-sectional view taken along line 2C-2C in Fig. 2A;
Fig. 3A is a cross-sectional view illustrating an ultrasonic welding apparatus used to manufacture the interphase insulating sheet of Fig. 1B;
Fig. 3B and Fig. 3C are diagrams for explaining ultrasonic welding performed by the ultrasonic welding apparatus of Fig. 3A;
Figs. 3D and 3E are partially enlarged plan views illustrating the interphase insulating sheet of Figs. 3B and 3C;
Fig. 4 is a cross-sectional view taken along line 4-4 in Fig. 1A;
Fig. 5 is a cross-sectional view taken along line 5-5 in Fig. 1A;
Fig. 6 is a schematic diagram for explaining the state of a coil as viewed from the rear side of the compressor of Fig. 1A;
Fig. 7 is a schematic diagram for explaining the state of a coil as viewed from the front side of the compressor of Fig. 1A;
Figs. 8A and 8B are perspective views for explaining the method for inserting a coil into the slots provided in the compressor of Fig. 1A;
Fig. 9 is a cross-sectional side view illustrating an ultrasonic welding apparatus according to a second embodiment of the present invention;
Figs. 9B and 9C are diagrams for explaining ultrasonic welding performed by the ultrasonic welding apparatus of Fig. 9A;
Fig. 10A is a cross-sectional side view illustrating an ultrasonic welding apparatus according to a third embodiment of the present invention;
Figs. 10B and 10C are diagrams for explaining ultrasonic welding performed by the ultrasonic welding apparatus of Fig. 10A;
Fig. 11A is a cross-sectional side view illustrating an ultrasonic welding apparatus according to a fourth embodiment of the present invention; and
Figs. 11B, 11C and 11D are diagrams for explaining ultrasonic welding performed by the ultrasonic welding apparatus of Fig. 11A.

### DETAILED DESCRIPTION OF THE PREFERRED EMBODIMENTS

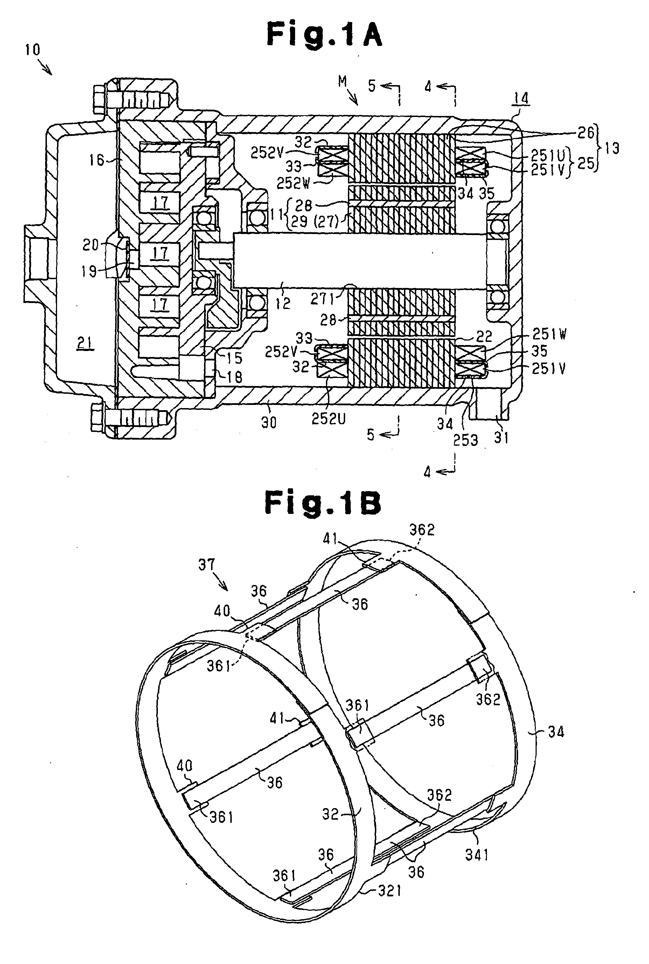

An electric compressor 10 according to a first embodiment of the present invention will now be described with reference to Figs. 1A to 8B. In the description of this specification, the front side and the rear side correspond to the left side and the right side, respectively, in Fig. 1A.

The electric compressor 10 shown in Fig. 1A is a scroll electric compressor. A rotating electric machine M of the electric compressor 10 includes a rotor 11, a rotary shaft 12, a stator 13, a motor housing 14, a compression operation body, which is a movable scroll 15 in this embodiment, and a fixed scroll 16. The rotor 11 is fixed to the rotary shaft 12, and the stator 13 is securely fitted to the inner circumferential surface of the motor housing 14. The movable scroll 15 orbits about the axis of the rotary shaft 12 as the rotary shaft 12 is rotated. When the movable scroll 15 orbits, compression chambers 17 between the movable scroll 15 and the fixed scroll 16 move toward the center of rotation while reducing their volumes.

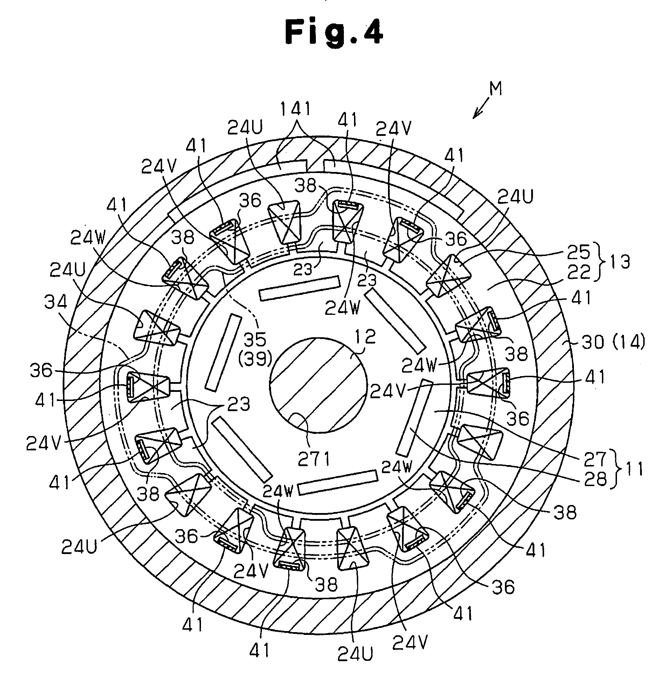

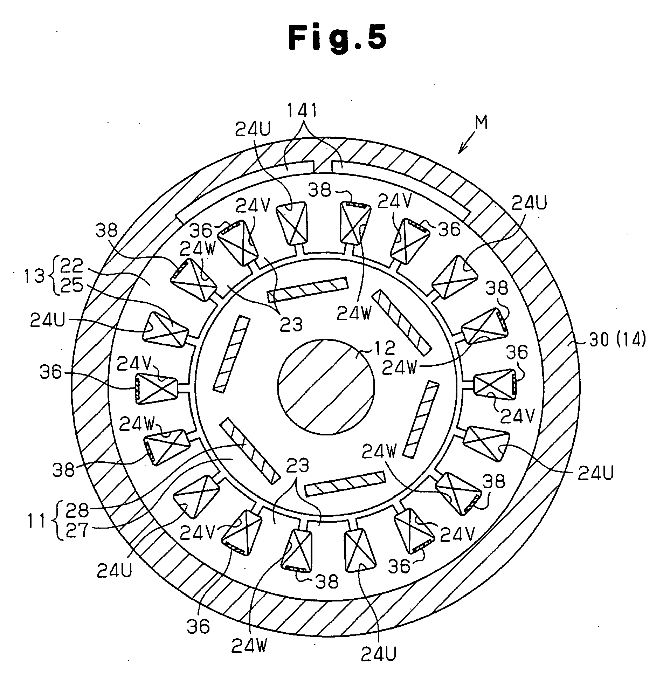

An introduction port 31 is provided in a circumferential wall 30 of the motor housing 14. The introduction port 31 is connected to an external refrigerant circuit, which is not shown, and refrigerant gas is introduced into the motor housing 14 from the external refrigerant circuit via the introduction port 31. The refrigerant gas introduced to the motor housing 14 is drawn into the compression chambers 17 via a passage 141 (shown in Figs. 4 and 5), which is provided between the inner circumferential surface of the motor housing 14 and the outer circumferential surface of the stator 13, and a suction port 18 by orbiting motion of the movable scroll 15 (suction operation). The refrigerant gas in the compression chambers 17 is compressed by orbiting motion of the movable scroll 15 (discharge operation), and is discharged into a discharge chamber 21 through a discharge port 19 while flexing a discharge valve flap 20. The refrigerant gas in the discharge chamber 21 flows out to the external refrigerant circuit, and returns to the motor housing 14.

As shown in Figs. 4 and 5, the stator 13 includes an annular stator core 22, teeth 23, which are arranged along the inner circumference of the stator core 22, and slots 24U, 24V, 24W, which are formed between adjacent teeth 23, and coils 25, which pass through the slots 24U, 24V, 24W. In the preferred embodiment, the number of the teeth 23 and the number of the slots 24U, 24V, 24W are each eighteen. The slots 24U, 24V, 24W are arranged at equal pitches along the circumferential direction of the annular stator 13.

As shown in Fig. 1A, the stator core 22 is formed by laminating core plates 26, which are magnetic bodies (steel plates). The rotor 11 includes a rotor core 27 and permanent magnets 28, which are embedded in the rotor core 27. The rotor core 27 is configured by laminating several core plates 29 made of magnetic material (steel plates). A shaft hole 271 is formed at the central portion of the rotor core 27 to extend through the rotor core 27 in the axial direction, and the rotary shaft 12 extends through the shaft hole 271. The rotary shaft 12 is secured to the rotor core 27.

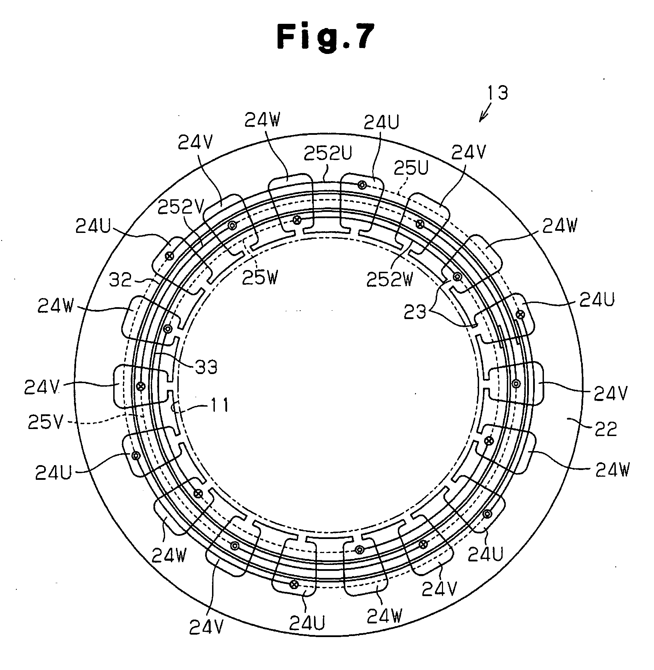

Fig. 7 is a schematic diagram illustrating the stator 13 as viewed from the front side. The coils 25 are provided on the teeth 23 by wave winding. The coils 25 in the slots 24U, 24V, 24W are separated from the inner wall of the slots 24U, 24V, 24W by insulating sheets (not shown), which are arranged between the coils 25 and the inner wall of the slots 24U, 24V, 24W.

A U-phase coil (shown by reference numeral 25U) passes through a first group of slots (shown by reference numeral 24U). A V-phase coil (shown by reference numeral 25V) passes through a second group of slots (shown by reference numeral 24V), and a W-phase coil (shown by reference numeral 25W) passes through a third group of slots (shown by reference numeral 24W). In Fig. 7, sections of each phase coil 25U, 25V, 25W shown by solid lines exist on the front end surface of the stator core 22. That is, the U-phase coil 25U includes second coil ends 252U, which are sections that pass through the slots 24U and protrude forward from the front end surface of the stator core 22. The V-phase coil 25V includes second coil ends 252V, which are sections that pass through the slots 24V and protrude forward from the front end surface of the stator core 22. The W-phase coil 25W includes second coil ends 252W, which are sections that pass through the slots 24W and protrude forward from the front end surface of the stator core 22. Sections of each phase coil 25U, 25V, 25W shown by broken lines exist on the rear end surface of the stator core 22. In each of the phase coils 25U, 25V, 25W, sections between the sections shown by the solid lines and the sections shown by the broken lines pass through the associated slots 24U, 24V, 24W.

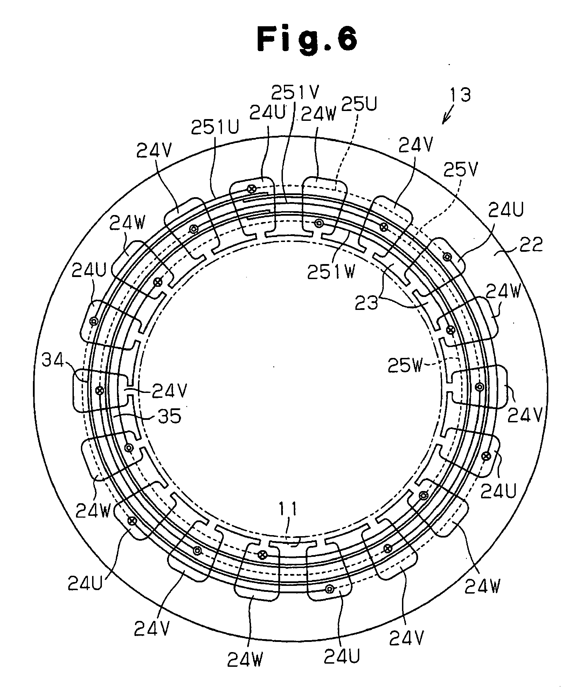

Fig. 6 is a schematic diagram illustrating the stator 13 as viewed from the rear side. Sections of the phase coils 25U, 25V, 25W shown by solid lines in Fig. 6 exist on the rear end surface of the stator core 22 of the stator 13. Sections of the phase coils 25U, 25V, 25W shown by broken lines in Fig. 6 exist on the front end surface of the stator core 22 of the stator 13. That is, the U-phase coil 25U includes first coil ends 251U, which are sections that pass through the slots 24U and protrude rearward from the rear end surface of the stator core 22. The V-phase coil 25V includes first coil ends 251V, which are sections that pass through the slots 24V and protrude rearward from the rear end surface of the stator core 22. The W-phase coil 25W includes first coil ends 251W, which are sections that pass through the slots 24W and protrude rearward from the rear end surface of the stator core 22.

As shown in Fig. 7, a first insulating portion 32 is arranged between the second coil ends 252U of the U-phase coil 25U and the second coil ends 252V of the V-phase coil 25V. The first insulating portion 32 is arranged to wrap around the rotor 11 once. A first insulating portion 33 is arranged between the second coil ends 252V of the V-phase coil 25V and the second coil ends 252W of the W-phase coil 25W. The first insulating portion 33 is arranged to wrap around the rotor 11 once. The first insulating portion 32 is arranged radially outward of the first insulating portion 33. As a result, the first insulating portion 33 is surrounded by the first insulating portion 32. The first insulating portions 32 and 33 are both made of a synthetic resin, and are formed into a strip shape. The ends of the strip-shaped first insulating portion 32 are heat welded to each other and the ends of the strip-shaped first insulating portion 33 are also heat welded to each other.

As shown in Fig. 6, a second insulating portion 34 is arranged between the first coil ends 251U of the U-phase coil 25U and the first coil ends 251V of the V-phase coil 25V. The second insulating portion 34 is arranged to wrap around the rotor 11 once. A second insulating portion 35 is arranged between the first coil ends 251V of the V-phase coil 25V and the first coil ends 251W of the W-phase coil 25W. The second insulating portion 35 is arranged to wrap around the rotor 11 once. The second insulating portion 34 is arranged radially outward of the second insulating portion 35. As a result, the second insulating portion 35 is surrounded by the second insulating portion 34. The second insulating portion 34 and the second insulating portion 35 are both made of a synthetic resin, and are formed into a strip shape. The ends of the strip-shaped second insulating portion 34 are heat welded to each other and the ends of the strip-shaped second insulating portion 35 are also heat welded to each other.

As shown in Fig. 1B, the first insulating portion 32 and the second insulating portion 34 are connected by bridge pieces 36 (six in this embodiment). As shown in Figs. 4 and 5, the bridge pieces 36 are inserted in the slots 24V in which the V-phase coil 25V is inserted. The first insulating portion 32, the second insulating portion 34, and the bridge pieces 36 configure an interphase insulating sheet 37, which insulates the coil ends of the V-phase coil 25V from the coil ends of the U-phase coil 25U. In this embodiment, the bridge pieces 36 are arranged to contact an inner surface 320 of the annular first insulating portion 32 and an inner surface 340 of the annular second insulating portion 34.

The first insulating portion 33 and the second insulating portion 35 are coupled by bridge pieces 38 (six in this embodiment as shown in Figs. 4 and 5). As shown in Figs. 4 and 5, the bridge pieces 38 are inserted in the slots 24W in which the W-phase coil 25W is inserted. The first insulating portion 33, the second insulating portion 35, and the bridge pieces 38 configure an interphase insulating sheet 39, which insulates the coil ends of the V-phase coil 25V from the coil ends of the W-phase coil 25W.

Since the configuration of the interphase insulating sheet 39 and that of the interphase insulating sheet 37 are the same, only the interphase insulating sheet 37 will be discussed below.

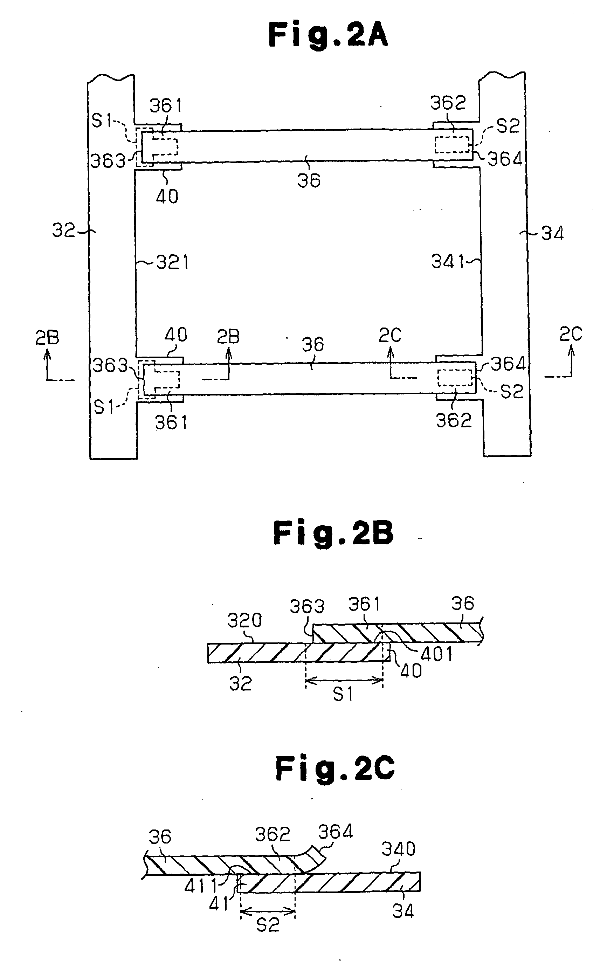

Fig. 2A shows a state where the interphase insulating sheet 37 is developed into a flat state. Fig. 2B shows a cross-sectional view taken along line 2B-2B in Fig. 2A. Fig. 2C shows a cross-sectional view taken along line 2C-2C in Fig. 2A. First coupling aids 40 extend toward the second insulating portion 34 from an opposing end 321 of the first insulating portion 32 facing the second insulating portion 34. The first coupling aids 40 are integrally formed with the first insulating portion 32. In this embodiment, the number of the first coupling aids 40 is six. Second coupling aids 41 extend toward the first insulating portion 32 from an opposing end 341 of the second insulating portion 34 facing the first insulating portion 32. The second coupling aids 41 are integrally formed with the second insulating portion 34. In this embodiment, the number of the second coupling aids 41 is six. As shown in Fig. 2B, a first end portion 361 of each bridge piece 36 closely contacts and is heat welded to an inner surface 401 of the associated first coupling aid 40, which is part of the first insulating portion 32, that is, part of the inner surface 320 of the first insulating portion 32. As shown in Fig. 2C, a second end portion 362 of each bridge piece 36 closely contacts and is heat welded to an inner surface 411 of the associated second coupling aid 41, which is part of the second insulating portion 34, that is, part of the inner surface 340 of the second insulating portion 34.

As shown in Fig. 2A, an edge 363 of each first end portion 361 is entirely included in a heat-welding zone S1 at the contact portion between the first end portion 361 of each bridge piece 36 and the associated first coupling aid 40. An edge 364 of each second end portion 362 is not included in a heat-welding zone S2 at the contact portion between the second end portion 362 of each bridge piece 36 and the associated second coupling aid 41.

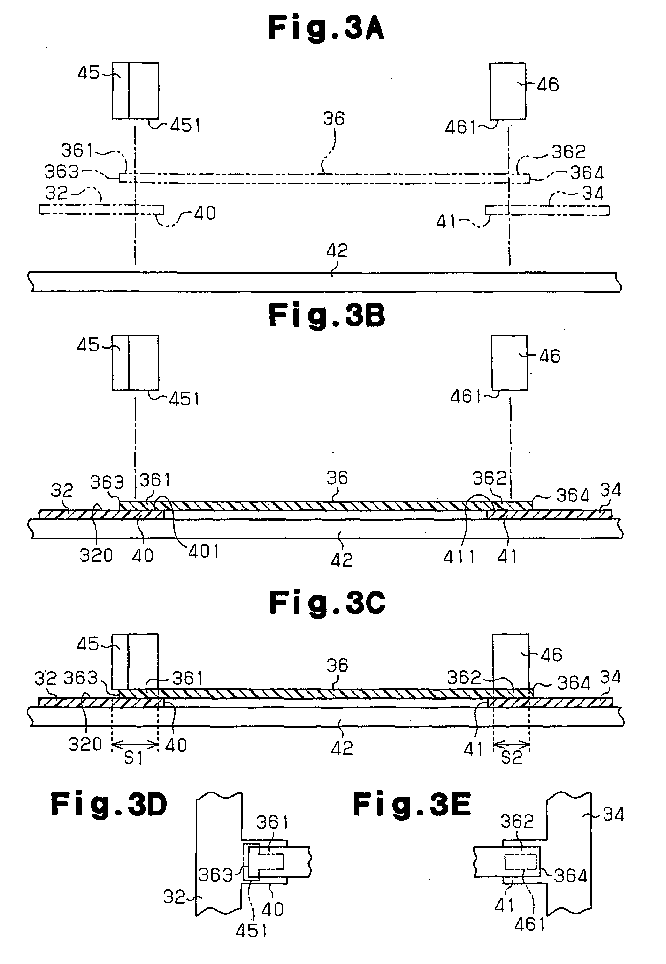

Fig. 3A shows an ultrasonic welding apparatus, which heat welds each bridge piece 36 to the associated first coupling aid 40 of the first insulating portion 32 and the associated second coupling aid 41 of the second insulating portion 34 using ultrasonic wave. The apparatus includes a ferrous ultrasonic welding base 42. The upper surface of the ultrasonic welding base 42 is a flat surface.

Also, the ultrasonic welding apparatus includes a first ultrasonic horn 45 and a second ultrasonic horn 46. The first ultrasonic horn 45 and the second ultrasonic horn 46 integrally move up and down. A lower surface 451 of the first ultrasonic horn 45 and a lower surface 461 of the second ultrasonic horn 46 are flat surfaces that are parallel to the upper surface of the ultrasonic welding base 42.

Figs. 3B and 3C show a method for coupling each bridge piece 36 to the associated first coupling aid 40 of the first insulating portion 32 and the associated second coupling aid 41 of the second insulating portion 34. As shown in Fig. 3B, the first insulating portion 32 and the second insulating portion 34 are mounted on the ultrasonic welding base 42. Next, the first end portion 361 of the bridge piece 36 is mounted on the first coupling aid 40, and the second end portion 362 of the bridge piece 36 is mounted on the second coupling aid 41.

Then, as shown in Fig. 3C, the first ultrasonic horn 45 and the second ultrasonic horn 46 are lowered such that the first ultrasonic horn 45 is pressed against the first end portion 361 of the bridge piece 36 and the second ultrasonic horn 46 is pressed against the second end portion 362 of the bridge piece 36. The first end portion 361 of the bridge piece 36 and the first coupling aid 40 closely contact each other by being sandwiched between the upper surface of the ultrasonic welding base 42 and the lower surface of the first ultrasonic horn 45, and the second end portion 362 of the bridge piece 36 and the second coupling aid 41 closely contact each other by being sandwiched between the upper surface of the ultrasonic welding base 42 and the lower surface of the second ultrasonic horn 46.

Then, in the zone where the first end portion 361 contacts the first coupling aid 40, the zone corresponding to the lower surface 451 of the first ultrasonic horn 45 is ultrasonically welded (heat welded). In the zone where the second end portion 362 contacts the second coupling aid 41, the zone corresponding to the lower surface 461 of the second ultrasonic horn 46 is ultrasonically welded (heat welded).

Fig. 3D shows the shape of the lower surface 451 of the first ultrasonic horn 45. The lower surface 451 presses the first end portion 361 against the first coupling aid 40 while covering the entire edge 363 of the first end portion 361. Therefore, the edge 363 of the first end portion 361 is entirely included in the range of the heat-welding zone S1.

Fig. 3E shows the shape of the lower surface 461 of the second ultrasonic horn 46. The lower surface 461 presses the second end portion 362 against the second coupling aid 41 without covering the edge 364 of the second end portion 362. Therefore, the edge 364 of the second end portion 362 is not included in the range of the heat-welding zone S2.

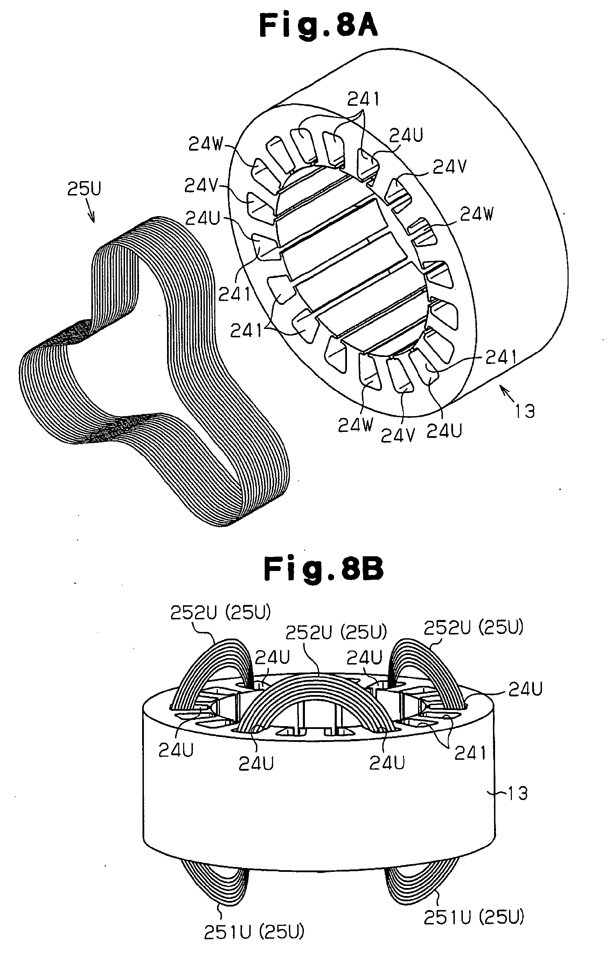

Next, the coils 25 are inserted in the slots 24U, 24V, and 24W using an inserter, which is not shown. Figs. 8A and 8B show the state where the U-phase coil 25U is inserted in the slots 24U using the inserter. The stator core 22 has a first end face and a second end face, which face in opposite directions in the axial direction of the stator core 22. Each of the slots 24U, 24V, and 24W has a first open end, which opens in the first end face of the stator core 22, and a second open end, which opens in the second end face of the stator core 22. As shown in Fig. 8A, the first open ends of the slots 24U, 24V, and 24W correspond to insertion ends 241 in which the coils 25 are inserted. The U-phase coil 25U is inserted in the slots 24U from the first open ends of the slots 24U, that is, the insertion ends 241 toward the second open ends. Fig. 8B shows the state where the U-phase coil 25U is inserted in the slots 24U.

After the U-phase coil 25U is inserted in the slots 24U, the bridge pieces 36 of the interphase insulating sheet 37 are inserted in the slots 24U to be radially inward of the U-phase coil 25U. Then, the V-phase coil 25V is inserted in the slots 24V from the insertion ends 241 using the inserter. After the V-phase coil 25V is inserted in the slots 24V, the bridge pieces 38 of the interphase insulating sheet 39 are inserted in the slots 24V to be radially inward of the V-phase coil 25V. Then, the W-phase coil 25W is inserted in the slots 24W from the insertion ends 241 using the inserter.

The preferred embodiment has the following advantages.
(1) When inserting the V-phase coil 25V in the slots 24V, the V-phase coil 25V abrades the first end portions 361 of the bridge pieces 36 of the interphase insulating sheet 37. Since the edges 363 of the first end portions 361 located in the vicinity of the insertion ends 241 of the slots 24V are ultrasonically welded to the first coupling aids 40, the V-phase coil 25V does not get caught by the edges 363 of the bridge pieces 36 when inserting the V-phase coil 25V in the slots 24V. As a result, part of the first end portion 361 of each bridge piece 36 does not get torn off or the insulating coating of the V-phase coil 25V does not get damaged.
   Similarly, when inserting the W-phase coil 25W in the slots 24W, the W-phase coil 25W abrades the first end portions of the bridge pieces 38 of the interphase insulating sheet 39. Since the edges of the first end portions of the bridge pieces 38 located in the vicinity of the insertion ends 241 of the slots 24W are ultrasonically welded to the first coupling aids, the W-phase coil 25W does not get caught by the edges of the bridge pieces 38 when inserting the W-phase coil in the slots 24W. As a result, part of the first end portion of each bridge piece 38 does not get torn off or the insulating coating of the W-phase coil 25W does not get damaged.
(2) The rotating electric machine M with wave winding that has low pulsation (low vibration) is suitable to be applied to the electric compressor 10. That is, in the electric compressor 10, there is a demand for reducing size in addition to reducing noise and vibration. The rotating electric machine M with wave winding according to the preferred embodiment is suitable for such demand. The electric compressor 10 using the rotating electric machine M with wave winding is particularly suitable for vehicle electric compressors that have particularly severe demands.

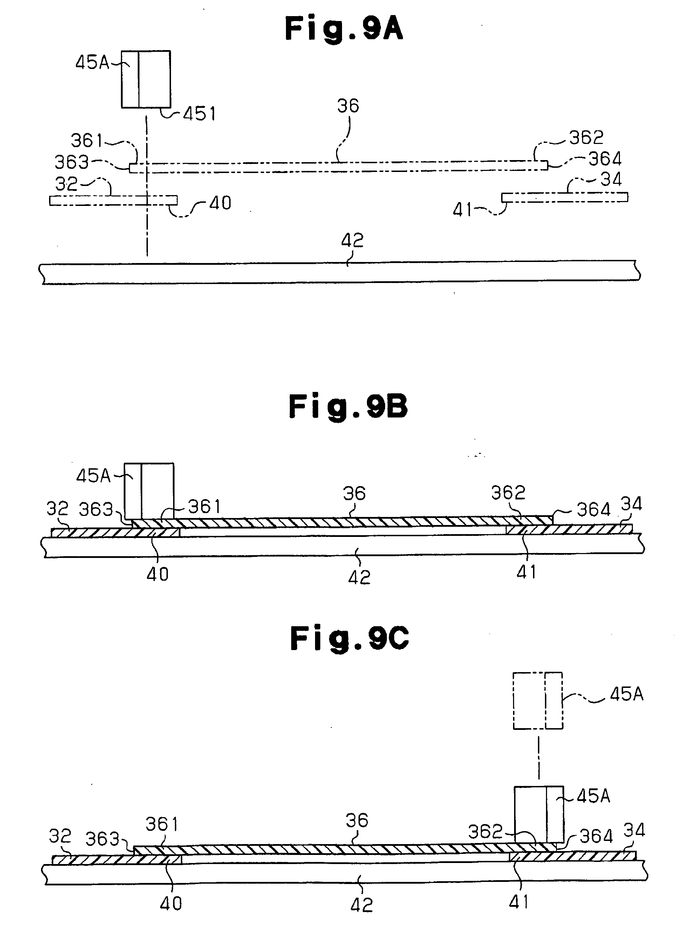

A second embodiment of the present invention will now be described with reference to Figs. 9A to 9C. In the second embodiment described below, like or the same reference numerals are given to those components that are like or the same as the corresponding components of the first embodiment, which has already been described, and explanations are omitted or simplified.

As shown in Fig. 9A, an ultrasonic horn 45A, which is identical to the first ultrasonic horn 45 of the first embodiment, is used in the second embodiment. As shown in Fig. 9A, after the first insulating portion 32 and the second insulating portion 34 are mounted on the ultrasonic welding base 42, the first end portion 361 of one of the bridge pieces 36 is mounted on the associated first coupling aid 40 and the second end portion 362 of the bridge piece 36 is mounted on the associated second coupling aid 41. Then, the ultrasonic horn 45A is lowered such that the ultrasonic horn 45A is pressed against the first end portion 361 of the bridge piece 36. Subsequently, in the zone where the first end portion 361 contacts the first coupling aid 40, only the zone corresponding to the lower surface 451 of the ultrasonic horn 45A is ultrasonically welded (heat welded). As a result, the edge 363 of the first end portion 361 is entirely ultrasonically welded to the associated first coupling aid 40.

The ultrasonic horn 45A is then lifted. After the ultrasonic horn 45A is lifted, as shown in Fig. 9C, the ultrasonic horn 45A is rotated by 180 degrees about the intermediate point between the first end portion 361 and the second end portion 362. Then, the ultrasonic horn 45A is lowered such that the ultrasonic horn 45A is pressed against the second end portion 362 of the bridge piece 36. Subsequently, the ultrasonic welding apparatus is operated, and in the zone where the second end portion 362 contacts the second coupling aid 41, only the zone corresponding to the lower surface 451 of the ultrasonic horn 45A is ultrasonically welded (heat welded). As a result, the edge 364 of the second end portion 362 is entirely ultrasonically welded to the associated second coupling aid 41.

In the second embodiment, since both of the edges 363, 364 are ultrasonically welded, by arranging the first insulating portion 32 between the first coil ends 251U of the U-phase coil 25U and the first coil ends 251 V of the V-phase coil 25V, and arranging the second insulating portion 34 between the second coil ends 252U of the U-phase coil 25U and the second coil ends 252V of the V-phase coil 25V, the same advantage as the advantage (1) of the first embodiment is obtained.

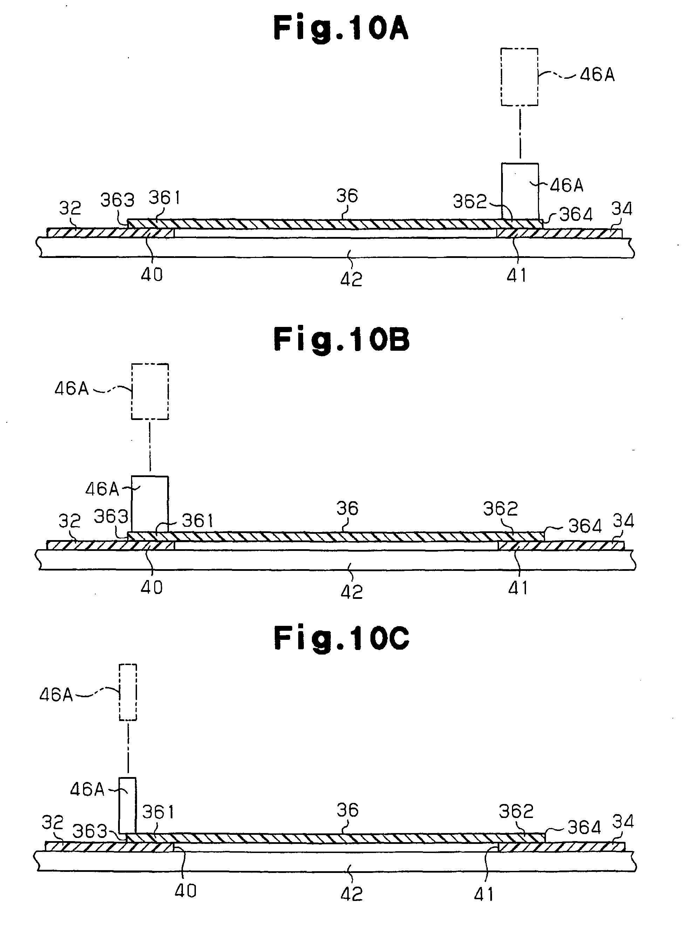

A third embodiment of the present invention will now be described with reference to Figs. 10A to 10C. In the third embodiment described below, like or the same reference numerals are given to those components that are like or the same as the corresponding components of the embodiments which have already been described, and explanations are omitted or simplified.

As shown in Fig. 10A, an ultrasonic horn 46A, which is identical to the second ultrasonic horn 46 of the first embodiment, is used in the third embodiment. After the first insulating portion 32 and the second insulating portion 34 are mounted on the ultrasonic welding base 42, the first end portion 361 of one of the bridge pieces 36 is mounted on the associated first coupling aid 40 and the second end portion 362 of the bridge piece 36 is mounted on the associated second coupling aid 41. Then, as shown in Fig. 10A, the ultrasonic horn 46A is lowered such that the ultrasonic horn 46A is pressed against the second end portion 362 of the bridge piece 36. Subsequently, in the zone where the second end portion 362 contacts the second coupling aid 41, only the zone corresponding to the lower surface 461 of the ultrasonic horn 46A is ultrasonically welded (heat welded). As a result, in the contact portion between the second end portion 362 and the second coupling aid 41, the heat-welding zone S2 is welded.

The ultrasonic horn 46A is then lifted. After the ultrasonic horn 46A is lifted, as shown in Fig. 10B, the ultrasonic horn 46A is lowered such that the ultrasonic horn 46A is pressed against the first end portion 361 of the bridge piece 36. Subsequently, the ultrasonic welding apparatus is operated, and in the zone where the first end portion 361 contacts the first coupling aid 40, only the zone corresponding to the lower surface 461 of the ultrasonic horn 46A is ultrasonically welded (heat welded). As a result, in the contact portion between the first end portion 361 and the first coupling aid 40, the heat-welding zone S2 is welded.

Then, after the ultrasonic horn 46A is lifted, as shown by the chain line in Fig. 10C, the ultrasonic horn 46A is rotated by 90 degrees about the axis extending vertically with respect to the ultrasonic horn 46A, and the ultrasonic horn 46A is lowered such that the ultrasonic horn 46A is pressed against the edge 363 of the first end portion 361. Then, the edge 363 of the first end portion 361 is entirely ultrasonically welded to the associated first coupling aid 40.

In the third embodiment, among the edges 363 and 364, only the edge 363 of the first end portion 361 is ultrasonically welded. Thus, the number of welding steps for ultrasonic welding using single ultrasonic horn 46A is reduced compared to a case where both of the edges 363, 364 are welded.

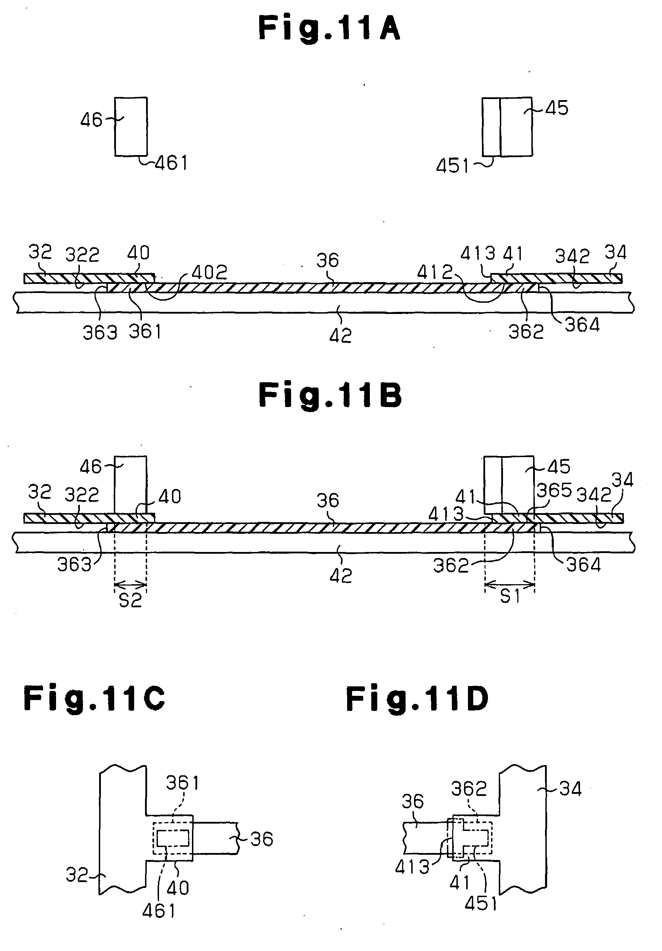

A fourth embodiment of the present invention will now be described with reference to Figs. 11A to 11D. In the fourth embodiment described below, like or the same reference numerals are given to those components that are like or the same as the corresponding components of the embodiments which have already been described, and explanations are omitted or simplified.

As shown in Fig. 11A, the first ultrasonic horn 45 and the second ultrasonic horn 46 of the first embodiment are used in the fourth embodiment. As shown in Fig. 11A, after one of the bridge pieces 36 is mounted on the ultrasonic welding base 42, one of the first coupling aids 40 of the first insulating portion 32 is mounted on the first end portion 361 of the bridge piece 36 and one of the second coupling aids 41 of the second insulating portion 34 is mounted on the second end portion 362 of the bridge piece 36. The first end portion 361 of the bridge piece 36 contacts an outer surface 402 of the first coupling aid 40, that is, an outer surface 322 of the first insulating portion 32, and the second end portion 362 of the bridge piece 36 contacts an outer surface 412 of the second coupling aid 41, that is, an outer surface 342 of the second insulating portion 34.

The first ultrasonic horn 45 and the second ultrasonic horn 46 are then lowered. Accordingly, as shown in Fig. 11B, the second ultrasonic horn 46 is pressed against the first coupling aid 40, and the first ultrasonic horn 45 is pressed against the second coupling aid 41. The first end portion 361 of the bridge piece 36 and the first coupling aid 40 closely contact each other by being sandwiched between the upper surface of the ultrasonic welding base 42 and the lower surface of the second ultrasonic horn 46. The second end portion 362 of the bridge piece 36 and the second coupling aid 41 closely contact each other by being sandwiched between the upper surface of the ultrasonic welding base 42 and the lower surface of the first ultrasonic horn 45.

Subsequently, in the zone where the first end portion 361 contacts the first coupling aid 40, the zone corresponding to the lower surface 461 of the second ultrasonic horn 46 is ultrasonically welded (heat welded), and in the zone where the second end portion 362 contacts the second coupling aid 41, the zone corresponding to the lower surface 451 of the first ultrasonic horn 45 is ultrasonically welded (heat welded).

Fig. 11C shows the shape of the lower surface 461 of the second ultrasonic horn 46. The lower surface 461 presses the first end portion 361 against the first coupling aid 40 without covering the entire edge 363 of the first end portion 361. Therefore, the edge 363 of the first end portion 361 is not included in the range of the heat-welding zone S2.

Fig. 11D shows the shape of the lower surface 451 of the first ultrasonic horn 45. The lower surface 451 presses the second end portion 362 against the second coupling aid 41 while covering an edge 413 of the second coupling aid 41, that is, part of the opposing end 341 of the second insulating portion 34. Therefore, the edge 413 of the second coupling aid 41 is entirely included in the range of the heat welding zone S1 at the contact portion between the second end portion 362 of the bridge piece 36 and the second coupling aid 41.

The second end portion 362 of the bridge piece 36 is located outside of the outer surface 342 of the second insulating portion 34, and the edge 413 of the second coupling aid 41 is located on an inner surface 365 of the second end portion 362 of the bridge piece 36. However, the edge 413 of the second coupling aid 41 is heat welded to the second end portion 362. Therefore, when inserting the coil to the slots, the coil does not get caught by the edge 413 of the second coupling aid 41.

The present invention may be modified as follows.

The first end portions 361 of the bridge pieces 36 may be heat welded to part of the first insulating portion 32 other than the first coupling aids 40.

The second end portions 362 of the bridge pieces 36 may be heat welded to part of the second insulating portion 34 other than the second coupling aids 41.

The insulating portions and the bridge pieces may be heat welded by heat-welding means other than ultrasonic welding.

The present invention may be applied to electric compressors other than scroll compressors (for example, piston compressors). Pistons are compression operation bodies.

## Claims

1. An interphase insulating sheet (37) of a rotating electric machine (M), the rotating electric machine (M) being provided with a stator (13) including an annular stator core (22), the stator core (22) including first and second end faces facing opposite directions in the axial direction of the stator core (22), the stator core (22) including a plurality of teeth (23) arranged along an inner circumference of the stator core (22) in the circumferential direction, slots (24U, 24V, 24W) being formed between adjacent teeth (23), each slot (24U, 24V, 24W) including a first open end, which opens in the first end face, and a second open end, which opens in the second end face, coils (25) of a plurality of phases are inserted in the slots (24U, 24V, 24W) from the first open ends and are provided on the teeth (23) in wave winding passing through the slots (24U, 24V, 24W),
wherein the coil (25) of each phase includes a first coil end (251U, 251V, 251W) arranged to protrude outside from the first end face and a second coil end (252U, 252V, 252W) arranged to protrude outside from the second end face,
wherein the interphase insulating sheet (37) comprises a first insulating portion (32) arranged between the first coil ends (251U, 251V, 251W) of two different phases, a second insulating portion (34) arranged between the second coil ends (252U, 252V, 252W) of two different phases, and at least one bridge piece (36) inserted in one of the slots (24U, 24V, 24W), the first insulating portion (32) and the second insulating portion (34) each including an outer surface facing radially outward of the stator core (22) and an inner surface facing radially inward of the stator core (22),
wherein the bridge piece (36) includes a first end portion, which is located in the vicinity of the first open end of the associated slot (24U, 24V, 24W) and heat welded to the first insulating portion (32), and a second end portion, which is located in the vicinity of the second open end of the associated slot (24U, 24V, 24W) and heat welded to the second insulating portion (34),
the interphase insulating sheet (37) being **characterized in that** when the first end portion (361) of the bridge piece (36) is heat welded to the inner surface of the first insulating portion (32), at least the region including the edge (363) of the first end portion (361) is heat welded to the first insulating portion (32), and
wherein, when the second end portion of the bridge piece (36) is heat welded to the outer surface of the second insulating portion (34), at least the region including an opposing end of the second insulating portion (34) facing the first insulating portion (32) is heat welded to the second end portion of the bridge piece (36).

2. The interphase insulating sheet (37) according to claim 1, **characterized in that** the first end portion (361) of the bridge piece (36) is heat welded to the inner surface of the first insulating portion (32).

3. The interphase insulating sheet (37) according to claim 2, **characterized in that** the second end portion of the bridge piece (36) is heat welded to the inner surface of the second insulating portion (34).

4. The interphase insulating sheet (37) according to any one of claims 1 to 3, **characterized in that** the first insulating portion (32) includes at least one first coupling aid (40) provided integrally with the first insulating portion (32) to extend from an opposing end of the first insulating portion (32) facing the second insulating portion (34), the second insulating portion (34) includes at least one second coupling aid (41) provided integrally with the second insulating portion (34) to extend from an opposing end of the second insulating portion (34) facing the first insulating portion (32), and the fist end portion of the bridge piece (36) is heat welded to the first coupling aid (40), and the second end portion of the bridge piece (36) is heat welded to the second coupling aid (41).

5. The interphase insulating sheet (37) according to claim 4, **characterized in that** the first end portion (361) of the bridge piece (36) is heat welded to the inner surface of the first insulating portion (32), and the second end portion of the bridge piece (36) is heat welded to the inner surface of the second insulating portion (34), and only the first end portion (361) of the bridge piece (36) among the first and second end portions of the bridge piece (36) is heat welded to the first coupling aid (40) at the region at least including the edge (363).

6. The interphase insulating sheet (37) according to any one of claims 1 to 5, **characterized in that** the heat welding is ultrasonic welding.

7. An electric compressor, which compresses gas in a compression chamber and discharges the gas by compression operation of a compression operation body based on rotation of a rotary shaft, the electric compressor being **characterized in that** the rotary shaft is driven by a rotating electric machine (M) provided with the interphase insulating sheet (37) according to any one of claims 1 to 6.

8. A method for manufacturing an interphase (37) insulating sheet of a rotating electric machine (M), the rotating electric machine (M) being provided with a stator (13) including an annular stator core (22), the stator core (22) including first and second end faces facing opposite directions in the axial direction of the stator core (22), the stator core (22) including a plurality of teeth (23) arranged along an inner circumference of the stator core (22) in the circumferential direction, slots (24U, 24V, 24W) being formed between adjacent teeth (23), each slot (24U, 24V, 24W) including a first open end, which opens in the first end face, and a second open end, which opens in the second end face, coils (25) of a plurality of phases are inserted in the slots (24U, 24V, 24W) from the first open ends and are provided on the teeth (23) in wave winding passing through the slots (24U, 24V, 24W), and the coil (25) of each phase including a first coil end (251U, 251V, 251W) arranged to protrude outside from the first end face and a second coil end (252U, 252V, 252W) arranged to protrude outside from the second end face, the method **being characterized by**:
preparing a first insulating portion (32) to be arranged between the first coil ends (251U, 251V, 251W) of two different phases and a second insulating portion (34) to be arranged between the second coil ends (252U, 252V, 252W) of two different phases, the first insulating portion (32) and the second insulating portion (34) each including an outer surface facing radially outward of the stator core (22) and an inner surface facing radially inward of the stator core (22);
preparing at least one bridge piece (36) to be inserted in the associated slot (24U, 24V, 24W), the bridge piece (36) including a first end portion coupled to the first insulating portion (32) and a second end portion coupled to the second insulating portion (34);
preparing an ultrasonic welding base (42) and an ultrasonic welding horn; and
ultrasonically welding the first insulating portion (32) and the edge (363) of the first end portion (361) in a state where the first insulating portion (32) contacts the first end portion (361) by sandwiching the first insulating portion (32) and the edge (363) of the first end portion (361) between the ultrasonic welding base (42) and the ultrasonic horn (45).

9. The method according to claim 8, **characterized in that** the first insulating portion (32) includes at least one first coupling aid (40) provided integrally with the first insulating portion (32) to extend from an opposing end of the first insulating portion (32) facing the second insulating portion (34), and
wherein the first coupling aid (40) and the edge (363) of the first end portion (361) of the bridge piece (36) are ultrasonically welded in a state of being sandwiched between the ultrasonic welding base (42) and the ultrasonic horn (45).
